# EUROPEAN PATENT APPLICATION

(11) **EP 2 683 040 A1**
(43) Date of publication of application: **08.01.2014**
(21) Application number: 12752542.6
(22) Date of filing: 28.02.2012
(51) Int. Cl.: H01R 35/02, H01R 43/00

(54) **BUS-BAR SET AND MANUFACTURING METHOD THEREFOR**

(30) Priority: 02.03.2011 JP 2011044824
(71) Applicant: AutoNetworks Technologies, Ltd., Yokkaichi-shi, Mie 510-8503 (JP); Sumitomo Wiring Systems, Ltd., Yokkaichi-shi, Mie 510-0058 (JP); Sumitomo Electric Industries, Ltd., Chuo-ku Osaka-shi Osaka 541-0041 (JP)
(72) Inventor: HASHIMOTO Daisuke, Yokkaichi-shi Mie 510-8503 (JP); FUKUMOTO Kouji, Yokkaichi-shi Mie 510-8503 (JP); SUETANI Masaharu, Yokkaichi-shi Mie 510-8503 (JP)
(74) Representative: Horn Kleimann Waitzhofer
(86) International application number: PCT/JP2012/054851
(87) International publication number: WO 2012/118046

(57) **Abstract**

The present invention is intended to provide a bus bar set that has excellent heat dissipation performance and mounting workability and prevents excessive heat generation due to an electrical connection failure, even when a cross section area of a conductive body is large. A bus bar set (1) has a plurality of multilayer bus bars (10) and an insulating member (20). The multilayer bus bars (10) each include an intermediate portion (11) having a plurality of layered plate-shaped conductive bodies (11A) and terminal portions (12) having conductive bodies extending from two ends of the intermediate portion (11) and connected to other members. The insulating member (20) is composed of a flexible insulating body having a flat external shape, and covers and integrally connects the intermediate portions (11) of the plurality of multilayer bus bars (10) aligned in parallel with gaps therebetween on one plane.

## Description

### TECHNICAL FIELD

The present invention relates to a bus bar set that includes a plurality of bus bars, and to a method of producing the bus bar set.

### BACKGROUND ART

Due to high-powered batteries, currents flowing through power lines have been increasing in electric vehicles, such as electric automobiles and hybrid automobiles. In most cases, generally a battery and an inverter circuit are connected by two power lines, and an inverter circuit and a motor or power generator are connected by three power lines. In order to prevent excessive heating in power lines due to a large current, it is necessary to employ power lines having a large cross section area and excellent heat dissipation.

For example, Patent Literature 1 discloses a wire harness having a plurality of round wires disposed in parallel and a flat cylindrical corrugated tube covering the round wires. When a plurality of wires are disposed in parallel, a surface area of an outline portion of the entire wire bundle increases, compared to a case where a plurality of wires are bundled in a state of being stacked in vertical and horizontal directions, thus increasing heat dissipation performance of the entire wire bundle.

Meanwhile, a bus bar composed of a plate-shaped conductive body is often employed as a power line mounted in a vehicle. In a bus bar, which has a flat shape, a conductive body portion has a large surface area compared to a round wire having a round strand of the same cross section area, and thus has high heat dissipation performance.

In order to prevent hazards and short-circuiting with another power line, however, a power line to which a high power voltage is applied needs to be covered by an insulating body, such as a resin, except for terminal portions on two ends to which mating terminals that form a power transmission path are connected before and after the line.

### CITATION LIST

### PATENT LITERATURE

Patent Literature 1: Japanese Patent Laid-Open Publication No. 2010-47033

### SUMMARY OF THE INVENTION

### PROBLEM TO BE SOLVED BY THE INVENTION

As Patent Literature 1 discloses, in a case where a power line is formed of a wire bundle including a plurality of covered wires disposed in parallel, terminals are provided to two ends of the wire bundle to bundle end portions of strands of the plurality of covered wires and make an electrical connection.

However, the plurality of wires, which are separately provided, are likely to have gaps among the strands in the end portions. When a terminal is attached to the end strand portion of the bundled wires, some strands are not sufficiently electrically connected to the terminal, and are thus likely to cause a connection failure between the strands and the terminal. Such a connection failure between the strands and the terminal leads to excessive heating of wires.

Meanwhile, in a case where one power line is formed of one covered wire or one bus bar, such a power line is difficult to bend due to its hardness, and is thus inferior in workability in mounting. In particular, the shorter the power line of one covered wire or one bus bar is, the more notable the problem in bending is.

In addition, one transmission path is formed of at least two or three power lines. Conventional power lines, however, are provided separately one by one, thus requiring cumbersome mounting work involving handling of many components.

An object of the present invention is to provide a bus bar set excellent in heat dissipation and mounting workability and capable of preventing excessive heat due to an electrical connection failure, even when a cross section area of a conductive body for power line use is large.

### SOLUTION TO PROBLEM

A bus bar set according to the present invention has the following elements:
(1) A first element is a plurality of multilayer bus bars each including an intermediate portion that has a plurality of layered plate-shaped conductive bodies and terminal portions that include conductive bodies extending from two ends of the intermediate portion and that are connected to other members. The term plate-shaped conductive body in the present specification is used to refer to, for example, a conductive body having a thickness of approximately 0.1 mm or a much thinner foil conductive body.
(2) A second element is an insulating member that includes a flexible insulating body having a flat external shape and that covers and integrally connects the intermediate portions of the multilayer bus bars aligned in parallel with gaps therebetween on one plane.

In the bus bar set according to the present invention, the insulating member is preferably a member composed of an elastomer.

In the bus bar set according to the present invention, the multilayer bus bar may have a structure in which a plurality of thin members including plate-shaped conductive bodies thinner than the multilayer bus bar are layered and two end portions of each of the thin members are joined. In this case, joined portions on the two ends and a portion between the joined portions are provided as the terminal portions and the intermediate portion, respectively, of the multilayer bus bar.

In the bus bar set according to the present invention, the multilayer bus bar may have a structure in which one plate-shaped conductive body having a thickness identical to that of the multilayer bus bar has at least one slit passing through in a width direction thereof in an intermediate area excluding two end areas. In this case, the intermediate area having the slit and two end portions thereof are provided as the intermediate portion and the terminal portions, respectively, of the multilayer bus bar.

Furthermore, the present invention may be a method of producing the bus bar set according to the present invention. Specifically, a method of producing the bus bar set according to a first aspect includes the following processes:
(1-1) a first process, which is a first resin molding process in which an insulating first resin member is molded, the first resin member having a flat shape and integrally covering first sides of the intermediate portions of the plurality of multilayer bus bars aligned in parallel with gaps therebetween on one plane; and
(1-2) a second process, which is a second resin molding process in which an insulating second resin member is molded by injecting a resin to second sides opposite to the first sides of the intermediate portions of the plurality of multilayer bus bars having the first sides covered by the first resin member, the second resin member having a flat shape and integrally covering the second sides of the intermediate portions of the plurality of multilayer bus bars.

In the method of producing the bus bar set according to the present invention, the second resin molding process preferably includes a process in which the resin is injected to the second sides of the intermediate portions of the plurality of multilayer bus bars through a film gate provided in an entire longitudinal direction of each of the intermediate portions of the plurality of multilayer bus bars.

A method of producing the bus bar set according to a second aspect includes the following processes:
(2-1) a first process in which an insulating first resin member, the plurality of multilayer bus bars, and an insulating second resin member are layered, the insulating first resin member having a flat shape and integrally covering first sides of the intermediate portions of the plurality of multilayer bus bars, the multilayer bus bars being aligned in parallel with gaps therebetween on one plane, the insulating second resin member having a flat shape and integrally covering second sides opposite to the first sides of the intermediate portions of the plurality of multilayer bus bars; and
(2-2) a second process in which the first resin member and the second resin member layered on the two sides of the plurality of multilayer bus bars are joined.

### ADVANTAGEOUS EFFECTS OF THE INVENTION

In the present invention, the multilayer bus bar, which is formed into a flat shape, has a higher surface area ratio relative to a cross section area, thus increasing heat dissipation performance. In addition, in the present invention, the intermediate portion of the multilayer bus bar has a structure in which the plurality of thin plate-shaped conductive bodies are layered. Thus, even when the intermediate portion is relatively short, the intermediate portion has flexibility in its thickness direction, specifically, in a direction in which the plurality of plate-shaped conductive bodies are layered. Furthermore, the intermediate portions of the multilayer bus bars are covered by the flexible insulating member. Thus, even when the cross section area of each of the multilayer bus bars is large, the intermediate portions of the multilayer bus bars covered by the insulating member have flexibility.

In addition, in the present invention, the plurality of multilayer bus bars each assigned to a phase of a power transmission path are integrally connected by the insulating member, and thus are provided as one component. Accordingly, the bus bar set of the present invention has a limited number of components to be handled in mounting of the plurality of multilayer bus bars, and thus increases work efficiency.

Furthermore, the terminal portions on the two ends of the multilayer bus bar are portions extending from the plurality of plate-shaped conductive bodies layered in the intermediate portion. The terminal portions are provided as, for instance, portions where the plurality of layered plate-shaped conductive bodies are integrally welded or portions originally extending from the plurality of conductive bodies of the intermediate portion. Thus, an electrical connection failure is unlikely to occur in the terminal portions of the multilayer bus bar.

Accordingly, the present invention can provide the bus bar set that has excellent heat dissipation performance and mounting workability and that also prevents excessive heat generation due to an electrical connection failure, even in a case where the cross section area of the conductive body for power line use is large.

In the bus bar set of the present invention, the insulating member is preferably composed of an elastomer material having excellent flexibility so that the flexibility of the intermediate portion of the multilayer bus bar is not inhibited.

In the bus bar set of the present invention, the multilayer bus bar having the structure in which the two end portions of the plurality of layered thin members are joined is preferred in that the multilayer bus bar is readily produced.

In the bus bar set of the present invention, the multilayer bus bar having the structure in which one plate-shaped conductive body has a slit in the intermediate is preferred in that an electrical connection failure can be completely prevented in the two end terminal portions.

Incidentally, when a resin is injected simultaneously from two sides of the intermediate portion to mold the insulating member that covers the intermediate portion of the multilayer bus bar, the insulating member is likely to be molded in a state where the intermediate portion is bent toward one side. In the method of producing the bus bar set according to the first aspect, however, the insulating member is molded separately from the first resin member and the second resin member, the first resin member covering the first sides of the intermediate portions of the plurality of multilayer bus bars, the second resin member covering the second sides of the intermediate portions. This prevents production defects, such as the intermediate portion of the multilayer bus bar being held in a state of being bent toward one side and what is commonly-called a short shot due to such a state. A short shot refers to a phenomenon where a resin is not sufficiently filled in a portion during resin molding.

In the method of producing the bus bar set according to the present invention, a resin is preferably injected through the film gate provided in the entire longitudinal direction of the intermediate portion of the multilayer bus bar. This prevents a short shot with even greater reliability.

In the method of producing the bus bar set according to the second aspect, the two resin members prepared in advance are layered on the two sides of the intermediate portions of the plurality of multilayer bus bars, and are then joined. This prevents production defects, such as the insulating member being molded in a state where the intermediate portions of the multilayer bus bars are bent toward one side and a short shot due to such a state.

### BRIEF DESCRIPTION OF DRAWINGS

Fig. 1 is a perspective view of a bus bar set 1 according to an embodiment of the present invention.
Fig. 2 is a side view of the bus bar set 1 during a process of being attached to a terminal base.
Fig. 3 is a perspective view of a multilayer bus bar 10 included in the bus bar set 1.
Fig. 4 is a view illustrating a first exemplary method of producing the multilayer bus bar 10.
Fig. 5 is a view illustrating a second exemplary method of producing the multilayer bus bar 10.
Fig. 6 is a view illustrating a first exemplary method of producing the bus bar set 1.
Fig. 7 is a view illustrating a flow path of a resin in a mold used in the first exemplary method of producing the bus bar set 1.
Fig. 8 is a view illustrating a second exemplary method of producing the bus bar set 1.

### EMBODIMENTS OF THE INVENTION

An embodiment of the present invention is described below with reference to the attached drawings. The embodiment below is presented as an exemplary embodiment of the present invention and shall not be construed as limiting a technical scope of the present invention. A bus bar set 1 according to the embodiment of the present invention is a bus bar set used, for example, as a power line that connects an inverter circuit and a motor or power generator in an electric vehicle or as a power line that connects a battery and an inverter circuit.

### <Embodiment of Bus Bar Set>

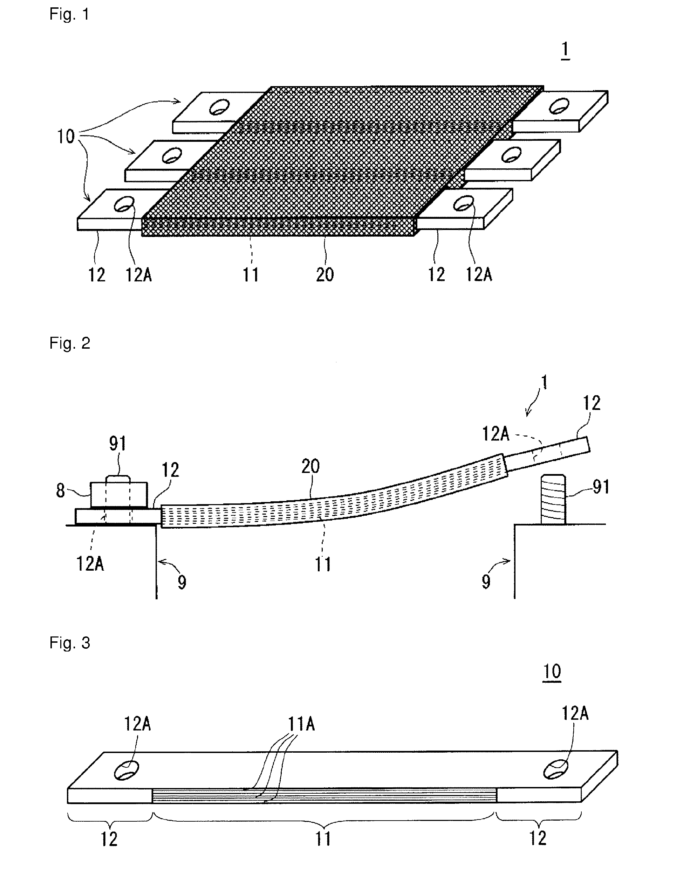

First, a configuration of the bus bar set 1 according to the embodiment of the present invention is described with reference to Figs. 1 to 3. With reference to Fig. 1, the bus bar set 1 has a plurality of multilayer bus bars 10 and an insulating member 20 partially covering and integrally connecting the plurality of multilayer bus bars 10.

With reference to Figs. 1 to 3, the multilayer bus bar 10 is a conductive member composed of a metal such as a copper, for example, and has an intermediate portion 11 and terminal portions 12 on two ends. Each multilayer bus bar 10 is mounted as a portion of a power transmission path to each phase of a power generator, such as a three-phase motor, for example.

In an example shown in Fig. 1, the bus bar set 1 has three multilayer bus bars 10 which are connected to respective phases of a three-phase power generator or circuit. However, the number of the multilayer bus bars 10 is not limited to three. For instance, the bus bar set 1 may have two multilayer bus bars 10 which are connected to a battery; the bus bar set 1 may have multilayer bus bars 10 in a multiple of two which are connected to batteries in a plurality of systems; and the bus bar set 1 may have multilayer bus bars 10 in a multiple of three which are connected to three-phase generators in a plurality of systems.

The intermediate portion 11 of the multilayer bus bar 10 has a structure in which a plurality of plate-shaped conductive bodies 11A are layered. The terminal portions 12 are conductive bodies extending from two ends of the intermediate portion 11 and are connected to other members. The terminal portions 12 have terminal holes 12A to be connected by fixtures, such as bolts, to front and rear connection ends of a power transmission path.

The insulating member 20 covers and integrally connects the intermediate portions 11 of the plurality of multilayer bus bars 10 aligned in parallel with gaps therebetween on one plane. The insulating member 20, which is composed of a flexible insulating body, has a flat external shape along an alignment direction of the plurality of multilayer bus bars 10, as shown in Fig. 1.

The insulating member 20 may be an insulating elastic member composed of a rubber or an elastomer (elastic polymer), which is a rubber material, for example. The elastomer includes a vulcanized rubber, such as a natural rubber and synthetic rubber; a urethane rubber; a silicone rubber; and a fluorine-containing rubber. Generally, a thermoset resin elastomer is used as a material for an elastomer insulating member. Furthermore, the insulating member 20 may be composed of a resin, such as polyamide (PA), polypropylene (PP), polybutylene terephthalate (PBT), ABS resin, or polyethylene (PE).

The bus bar set 1 is used in a state where the insulating member 20 is covered by a shielding member, such as braided wires (not shown in Figs. 1 to 3). The bus bar set 1 may also be used in a state where the insulating member 20 is covered by the shielding member, such as braided wires, and an exterior thereof is further covered by an insulating outer member, such as a protection tube or tape composed of a flexible resin.

Fig. 2 is a side view of the bus bar set 1 during a process of being attached to front and rear terminal bases 9 of a power transmission path. In an example of Fig. 2, a stud bolt 91 provided in the terminal base 9 is inserted into the terminal hole 12A of the terminal portion 12 of the multilayer bus bar 10, and then a nut 8 is mounted to the stud bolt 91. Thus, the terminal portion 12 is fixated to the terminal base 9 as well as electrically connected to the terminal base 9.

The multilayer bus bar 10, which is formed into a flat shape, has a higher surface area ratio relative to a cross section area, thus increasing heat dissipation performance.

The intermediate portion 11 of the multilayer bus bar 10 has a structure in which the plurality of thin plate-shaped conductive bodies 11A are layered. Thus, even when the intermediate portion 11 is relatively short, the intermediate portion 11 has flexibility in its thickness direction, specifically, in a direction in which the plurality of plate-shaped conductive bodies 11A are layered. Furthermore, the intermediate portions 11 of the plurality of multilayer bus bars 10 are covered by the flexible insulating member 20. Thus, as shown in Fig. 2, even when the cross section area of each of the multilayer bus bars 10 is large, the intermediate portions 11 of the multilayer bus bars 10 covered by the insulating member 20 have flexibility.

In addition, the bus bar set 1 is provided as one component in which the plurality of multilayer bus bars 10 each assigned to a phase of a power transmission path are integrally connected by the insulating member 20. Accordingly, the bus bar set 1 of the present invention has a limited number of components to be handled in mounting of the plurality of multilayer bus bars 10, and thus increases work efficiency.

Furthermore, the terminal portions 12 on the two ends of the multilayer bus bar 10 are portions extending from the plurality of plate-shaped conductive bodies 11A layered in the intermediate portion 11. The terminal portions 12 are provided as, for instance, portions where the plurality of layered plate-shaped conductive bodies are integrally welded or portions originally extending from the plurality of conductive bodies of the intermediate portion 11. Thus, an electrical connection failure is unlikely to occur in the terminal portions 12 of the multilayer bus bar 10.

As described above, even in a case where the cross section area of each of the multilayer bus bars 10 for power line use is large, the bus bar set 1 has excellent heat dissipation performance and mounting workability, and also prevents excessive heat generation due to an electrical connection failure. The insulating member 20 composed of an elastomer material having excellent flexibility, in particular, is preferred so that the flexibility of the intermediate portion 11 of the multilayer bus bar 10 is not inhibited.

### <First Exemplary Method of Producing Multilayer Bus Bar 10>

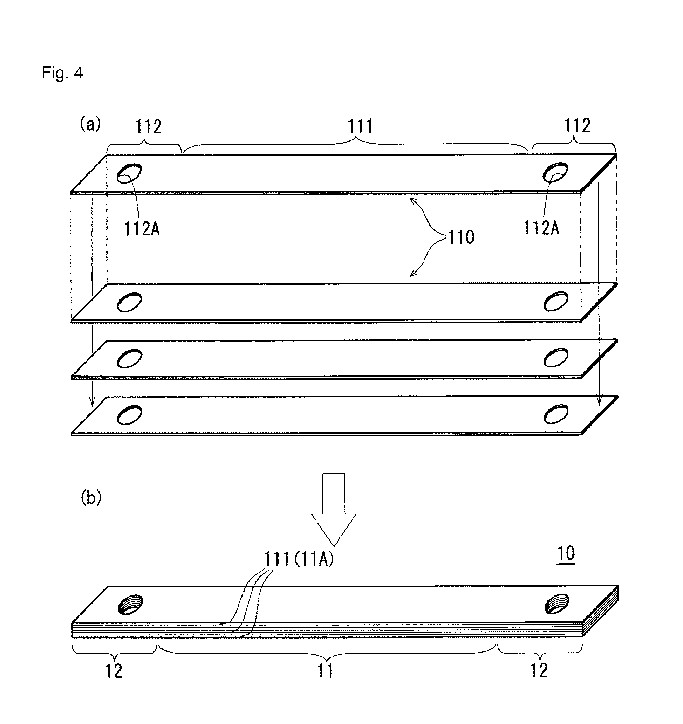

A first exemplary method of producing the multilayer bus bar 10 is described below with reference to Fig. 4. The first exemplary method of production includes a layering process shown in Fig. 4(a) and a joining process shown in Fig. 4(b).

In the layering process, a plurality of thin members 110 are layered, the thin members 110 being composed of plate-shaped conductive bodies thinner than the multilayer bus bar 10. The thin member 110 is a conductive member composed of a metal, such as a copper, for example, and has an intermediate portion 111 and terminal portions 112 on both ends. Through-holes 112A are provided in the terminal portions 112.

In the joining process, two end portions of the plurality of layered thin members 110 are joined by welding to form the terminal portions 12. The terminal portions 112 on the two ends are joined, and thus the plurality of integrally connected thin members 110 are produced as the multilayer bus bar 10.

Specifically, the multilayer bus bar 10 produced in the first exemplary method of production has a structure in which the plurality of thin members 110 composed of plate-shaped conductive bodies thinner than the multilayer bus bar 10 are layered, and then the terminal portions 112 on the two ends of each of the thin members 110 are joined. Joined portions, where the plurality of terminal portions 112 are joined on the two ends, and the intermediate portion 111 between the joined portions serve as the terminal portions 12 and the intermediate portion 11, respectively, of the multilayer bus bar 10.

The multilayer bus bar 10 produced in the first exemplary method of production is preferred in that the multilayer bus bar 10 can be produced in a simple process in which the plurality of thin members 110 having a very simple structure are prepared and the thin members 110 are joined by welding.

### <Second Exemplary Method of Producing Multilayer Bus Bar 10>

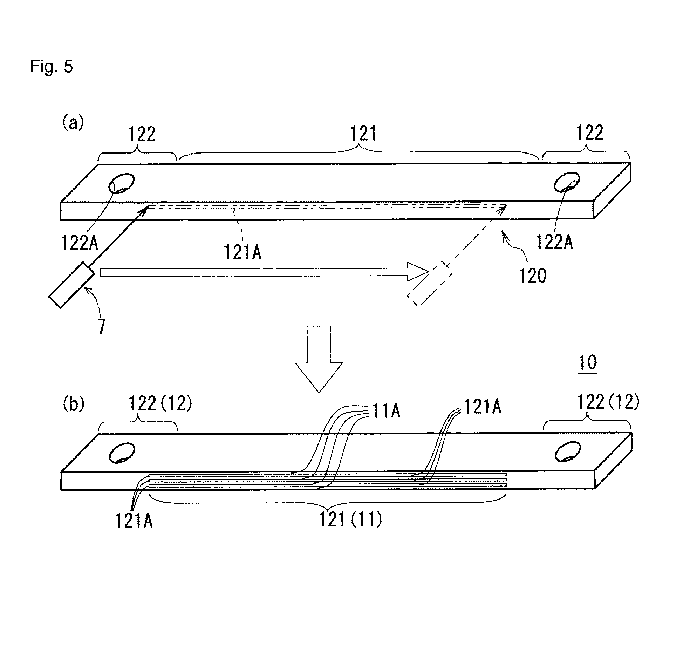

A second exemplary method of producing the multilayer bus bar 10 is described below with reference to Fig. 5. The second exemplary method of production includes a layered slit forming process, as shown in Fig. 5(a). Fig. 5(b) illustrates the multilayer bus bar 10 produced in the slit forming process.

In the slit forming process, one or a plurality of slits 121A are formed that pass through in a width direction of an intermediate area 121, which is a portion excluding two end areas 122 of one plate-shaped bar-shaped conductive body 120 having a thickness identical to that of the multilayer bus bar 10. The two end areas 122 of the bar-shaped conductive body 120 have through-holes 122A that serve as the terminal holes 12A.

In an example of Fig. 5(a), the slit 121A in the intermediate area 121 is formed by laser light from a laser processor 7 that scans the bar-shaped conductive body 120 in a longitudinal direction. The slit 121A may be formed by another processing method.

With reference to Fig. 5(b), the multilayer bus bar 10 produced in the second exemplary method of production has a structure in which at least one slit 121A is formed that passes through in the width direction of the intermediate area 121, which excludes the two end areas 122 of one plate-shaped bar-shaped conductive body 120 having the thickness identical to that of the multilayer bus bar 10. Then, the portion of the intermediate area 121 where the slit 121A is formed and the portions of the two end areas 122 serve as the intermediate portion 11 and the terminal portions 12, respectively, of the multilayer bus bar 10.

In the multilayer bus bar 10 produced in the second exemplary method of production, the terminal portions 12 are originally integrated conductive bodies. This completely prevents an electrical connection failure in the terminal portions 12 on the two ends.

### <First Exemplary Method of Producing Bus Bar Set 1>

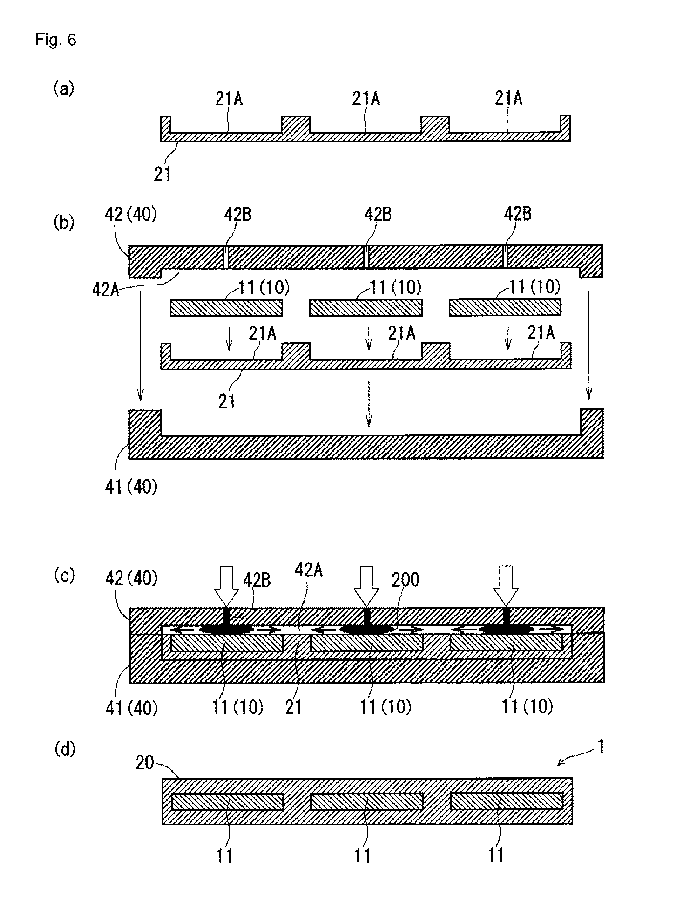

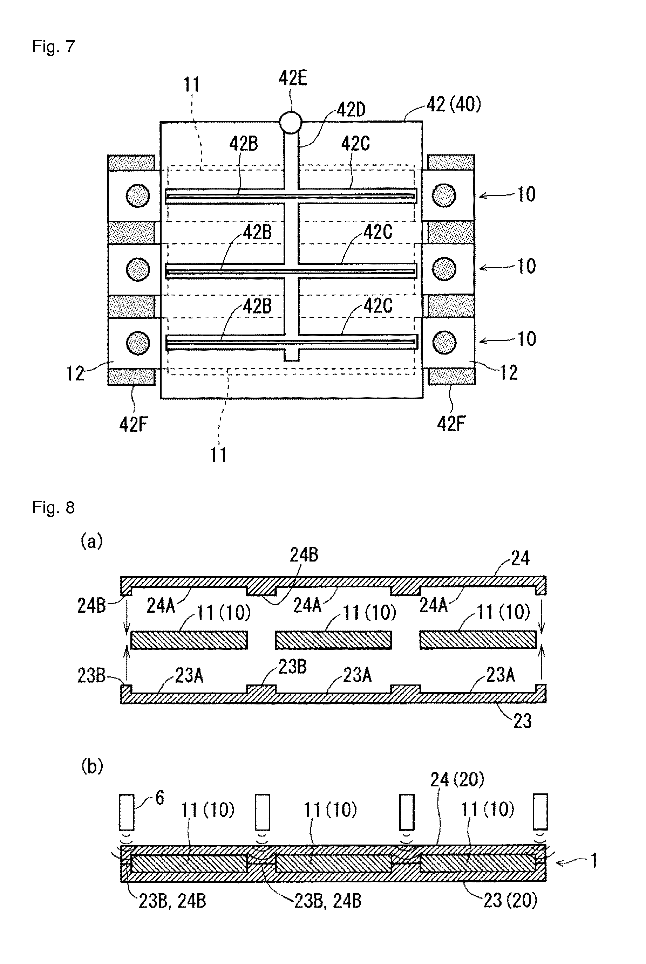

A first exemplary method of producing the bus bar set 1 is described below with reference to Figs. 6 and 7. The plurality of multilayer bus bars 10 are produced in advance before beginning each process in the present production method.

The first exemplary method of production includes a first resin molding process, in which a first resin member 21 is molded, as shown in Fig. 6(a); and a second resin molding process, in which a second resin member 22 is insert-molded with the first resin member 21 and the multilayer bus bar 10 as insert components.

Fig. 6(a) is a cross-sectional view of the first resin member 21. Figs. 6(b) and 6(c) illustrate the second resin molding process. Fig. 6(d) is a cross-sectional view of the multilayer bus bar 10 produced in the first exemplary method of production. In the description below, with the plurality of multilayer bus bars 10 aligned in parallel with gaps therebetween along one plane as a reference, a side in a direction orthogonal to the alignment direction of the plurality of multilayer bus bars 10 is referred to as a first side, and a side opposite thereto is referred to as a second side.

In the first resin molding process, the insulating first resin member 21 having a flat shape is molded, the first resin member 21 integrally covering first sides of the intermediate portions 11 of the plurality of multilayer bus bars 10 aligned in parallel with gaps therebetween on one plane.

With reference to Fig. 6(a), a plurality of grooves 21A are provided in the first resin member 21 into which the plurality of multilayer bus bars 10 are fitted. The plurality of multilayer bus bars 10 are fitted to the plurality of grooves 21A of the first resin member 21, and thus are aligned in parallel with gaps therebetween on one plane.

The first resin molding process may be performed by very common injection-molding, or by insert-molding in which the intermediate portions 11 of the plurality of multilayer bus bars 10 are insert components.

In the second resin molding process, a resin 200 is injected to second sides of the intermediate portions 11 of the plurality of multilayer bus bars 10 having the first sides covered by the first resin member 21. Thus, the insulating second resin member 22 having a flat shape is molded, the second resin member 22 integrally covering the second sides of the intermediate portions 11 of the plurality of multilayer bus bars 10. The second resin molding process is an insert-molding process in which the first resin member 21 and the plurality of multilayer bus bars 10 fitted to the grooves 21A thereof are insert components.

A mold (40) used in the second resin molding process includes a first mold 41 into which the first resin member 21 is fitted, and a second mold 42 that molds the second resin member 22. With reference to Fig. 6(c), the first mold 41 and the second mold 42 are combined from both sides of the first resin member 21 and the plurality of multilayer bus bars 10, which are insert components. Thus, a molding space 42A to form the second resin member 22 is provided.

Fig. 7 illustrates a flow path of a resin in the second mold 42 used in the second resin molding process. In the second resin molding process, the plurality of multilayer bus bars 10 are supported by supports 42F in the terminal portions 12 thereof.

The second mold 42 has a sprue 42E that forms a flow path for the melted resin 200, a first runner 42D, a second runner 42C, and a film gate 42B. The melted resin 200 flows from the sprue 42E through the first runner 42D and the second runner 42C, and lastly passes through the film gate 42B to be injected into the molding space 42A.

The second mold 42 that forms the flow path of the resin 200 may be configured of one mold. Alternatively, the second mold 42 may include an inner mold and an outer mold, the inner mold functioning as a core opposite to the first mold 41, the outer mold forming the first runner 42D and the second runner 42C along with the inner mold.

With reference to Fig. 7, the film gate 42B connected to the molding space 42A is provided in an entire longitudinal direction of the intermediate portion 11 of each of the plurality of multilayer bus bars 10. In the second resin molding process, the melted resin 200 is injected to the second sides of the intermediate portions 11 of the plurality of multilayer bus bars 10 through the film gate 42B.

The resin 200 injected in the second molding process is adhered to the first resin member 21 and the plurality of multilayer bus bars 10, and is then provided as the second resin member 22. Specifically, in the second resin molding process, the insulating member 20 is integrally formed of the first resin member 21 and the second resin member 22 having the plurality of multilayer bus bars 10 therebetween. Fig. 6(d) is a cross-sectional view of the bus bar set 1 that includes the insulating member 20 produced as above.

According to the first exemplary method of production, the insulating member 20 includes the separately molded first resin member 21 and second resin member 22, the first resin member 21 covering the first sides of the intermediate portions 11 of the plurality of multilayer bus bars 10, the second resin member 22 covering the second sides of the intermediate portions 11. This prevents production defects, such as the intermediate portion 11 of the multilayer bus bar 10 being held in a state of being bent toward one side and what is commonly-called a short shot due to such a state.

In addition, the resin 200 is injected through the film gate 42B provided in the entire longitudinal direction of the intermediate portion 11 of the multilayer bus bar 10. This is suitable for more reliable prevention of a short shot.

### <Second Exemplary Method of Producing Bus Bar Set 1>

A second exemplary method of producing the bus bar set 1 is described below with reference to Fig. 8. The plurality of multilayer bus bars 10 are produced in advance before beginning each process in the present production method. The second exemplary method of production includes a layering process shown in Fig. 8(a) and a joining process shown in Fig. 8(b).

In the layering process, an insulating first resin member 23 having a flat shape, the plurality of multilayer bus bars 10, and an insulating second resin member 24 having a flat shape are layered. The first resin member 23 integrally covers first sides of the intermediate portions 11 of the plurality of multilayer bus bars 10. The multilayer bus bars 10 are aligned in parallel with gaps therebetween on one plane. The second resin member 24 integrally covers second sides, opposite to the first sides, of the intermediate portions 11 of the plurality of multilayer bus bars 10.

With reference to Fig. 8(a), a plurality of grooves 23A are provided in the first resin member 23 into which the plurality of multilayer bus bars 10 are fitted. Similarly, a plurality of grooves 24A are provided in the second resin member 24 into which the plurality of multilayer bus bars 10 are fitted. The first resin member 23 and the second resin member 24 are produced in a very common injection-molding process in advance of the layering process.

The plurality of multilayer bus bars 10 are fitted to the plurality of grooves 23A and 24A of the first resin member 23 and the second resin member 24, respectively, and thus are aligned in parallel with gaps therebetween on one plane.

In the joining process, the first resin member 23 and the second resin member 24 layered on the two sides of the plurality of multilayer bus bars 10 are joined. Fig. 8(b) illustrates an example in which an edge portion 23B of the groove 23A of the first resin member 23 and an edge portion 24B of the groove 24A of the second resin member 24 are welded by an ultrasonic welder 6. In the joining process, the insulating member 20 is integrally formed of the first resin member 23 and the second resin member 24 having the plurality of multilayer bus bars 10 therebetween.

Other than ultrasonic welding of the first resin member 23 and the second resin member 24, the joining process may be performed by heat-adhesion of the first resin member 23 and the second resin member 24 or adhesion with an adhesive agent.

According to the second exemplary method of production shown in Fig. 8, the two resin members 23 and 24 prepared in advance are layered on the two sides of the intermediate portions 11 of the plurality of multilayer bus bars 10, and are then joined. This prevents production defects, such as molding of the insulating member 20 in a state where the intermediate portion 11 of the multilayer bus bar 10 is bent toward one side and a short shot due to such a state.

### <Other>

In the bus bar set 1, the insulating member 20 may be a heat shrinkable tube. In this case, the intermediate portions 11 of the plurality of multilayer bus bars 10 are inserted through a heat shrinkable tube before shrinkage. Then, in a state where the plurality of multilayer bus bars 10 are aligned in parallel with gaps therebetween on one plane, the heat shrinkable tube covering the intermediate portions 11 is heated until tightly adhered to the intermediate portions 11.

### INDEXT TO REFERENCE NUMERALS

1: Bus bar set
6: Ultrasonic welder
7: Laser processor
8: Nut
9: Terminal base
10: Multilayer bus bar
11: Intermediate portion of the multilayer bus bar
11A: Plate-shaped conductive body
12: Terminal portion of the multilayer bus bar
12A: Terminal hole
20: Insulating member
21, 23: First resin member
21A, 23A, 24A: Groove
22: Second resin member
23B, 24B: Edge portion of the groove
24: Second resin member
41: First mold
42: Second mold
42A: Molding space
42F: Support
42E: Sprue
42D: First runner
42C: Second runner
42B: Film gate
91: Stud bolt
110: Thin member
111: Intermediate portion of the thin member
112: Terminal portion of the thin member
112A, 122A: Through-hole
120: Bar-shaped conductive body
121: Intermediate area of the bar-shaped conductive body
121A: Slit
122: Two end areas of the bar-shaped conductive body
200: Resin

## Claims

1. A bus bar set (1) comprising:
a plurality of multilayer bus bars (10); and
an insulating member (20),
the multilayer bus bars (10) each comprising:
an intermediate portion (11) having a plurality of layered plate-shaped conductive bodies; and
terminal portions (12) comprising conductive bodies extending from two ends of the intermediate portion (11) and connected to other members,
the insulating member (20) comprising a flexible insulating body having a flat external shape,
the insulating member (20) covering and integrally connecting the intermediate portions (11) of the multilayer bus bars (10) aligned in parallel with gaps therebetween on one plane.

2. The bus bar set according to claim 1, wherein the insulating member (20) is a member comprising an elastomer.

3. The bus bar set according to one of claims 1 and 2, wherein the multilayer bus bar (10) has a structure in which a plurality of thin members (110) comprising plate-shaped conductive bodies thinner than the multilayer bus bar (10) are layered and two end portions of each of the thin members (110) are joined, and joined portions on the two ends and a portion between the joined portions are provided as the terminal portions (12) and the intermediate portion (11), respectively, of the multilayer bus bar (10).

4. The bus bar set according to one of claims 1 and 2, wherein the multilayer bus bar (10) has a structure in which one plate-shaped conductive body (120) having a thickness identical to that of the multilayer bus bar (10) has at least one slit (121A) passing through in a width direction thereof in an intermediate area (121) excluding two end areas (122), and the intermediate area (121) having the slit (121A) and two end portions thereof are provided as the intermediate portion (11) and the terminal portions (12), respectively, of the multilayer bus bar (10).

5. A method of producing a bus bar set (1) comprising a plurality of multilayer bus bars (10) each comprising an intermediate portion (11) having a plurality of layered plate-shaped conductive bodies and terminal portions (12) comprising conductive bodies extending from two ends of the intermediate portion (11) and connected to other members, the method comprising:
a first resin molding process in which an insulating first resin member (21) is molded, the first resin member (21) having a flat shape and integrally covering first sides of the intermediate portions (11) of the plurality of multilayer bus bars (10) aligned in parallel with gaps therebetween on one plane; and
a second resin molding process in which an insulating second resin member (22) is molded by injecting a resin to second sides opposite to the first sides of the intermediate portions (11) of the plurality of multilayer bus bars (10) having the first sides covered by the first resin member (21), the second resin member (22) having a flat shape and integrally covering the second sides of the intermediate portions (11) of the plurality of multilayer bus bars (10).

6. The method of producing the bus bar set according to claim 5, wherein the second resin molding process comprises a process in which the resin is injected to the second sides of the intermediate portions (11) of the plurality of multilayer bus bars (10) through a film gate (42B) provided in an entire longitudinal direction of each of the intermediate portions (11) of the plurality of multilayer bus bars (10).

7. A method of producing a bus bar set (1) comprising a plurality of multilayer bus bars (10) each comprising an intermediate portion (11) having a plurality of layered plate-shaped conductive bodies and terminal portions (12) comprising conductive bodies extending from two ends of the intermediate portion (11) and connected to other members, the method comprising:
a process in which an insulating first resin member (23), the plurality of multilayer bus bars (10), and an insulating second resin member (24) are layered, the insulating first resin member (23) having a flat shape and integrally covering first sides of the intermediate portions (11) of the plurality of multilayer bus bars (10), the multilayer bus bars (10) being aligned in parallel with gaps therebetween on one plane, the insulating second resin member (24) having a flat shape and integrally covering second sides opposite to the first sides of the intermediate portions (11) of the plurality of multilayer bus bars (10); and
a process in which the first resin member (23) and the second resin member (24) layered on the two sides of the plurality of multilayer bus bars (10) are joined.
